(19) Europäisches Patentamt / European Patent Office / Office européen des brevets

(11) **EP 2 898 382 B1**

(12) **EUROPÄISCHE PATENTSCHRIFT**

(45) Veröffentlichungstag und Bekanntmachung des Hinweises auf die Patenterteilung:
**30.10.2019 Patentblatt 2019/44**

(21) Anmeldenummer: **13791727.4**

(22) Anmeldetag: **24.09.2013**

(51) Int Cl.:
*G05D 1/00* (2006.01)  *G05D 1/02* (2006.01)

(86) Internationale Anmeldenummer:
**PCT/AT2013/050192**

(87) Internationale Veröffentlichungsnummer:
**WO 2014/043732 (27.03.2014 Gazette 2014/13)**

(54) **ROBOTER UND VERFAHREN ZUR AUTONOMEN INSPEKTION ODER BEARBEITUNG VON BODENFLÄCHEN**

ROBOT AND METHOD FOR AUTONOMOUS INSPECTION OR PROCESSING OF FLOOR AREAS

ROBOT ET PROCÉDÉ D'INSPECTION AUTONOME OU DE TRAITEMENT DE SURFACE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **24.09.2012 DE 102012109004**

(43) Veröffentlichungstag der Anmeldung:
**29.07.2015 Patentblatt 2015/31**

(73) Patentinhaber: **Robart GmbH**
**4020 Linz (AT)**

(72) Erfinder:
• **ARTÉS, Harold**
 **4020 Linz (AT)**
• **SEETHALER, Dominik**
 **4020 Linz (AT)**
• **SCHAHPAR, Michael**
 **4020 Linz (AT)**

(74) Vertreter: **Westphal, Mussgnug & Partner Patentanwälte mbB**
**Werinherstrasse 79**
**81541 München (DE)**

(56) Entgegenhaltungen:
**US-A1- 2011 167 574  US-A1- 2011 264 305**

• **Jeffrey M. Bradshaw ET AL: "Dimensions of Adjustable Autonomy and Mixed-Initiative Interaction" In: "Field Programmable Logic and Application", 1. Januar 2004 (2004-01-01), Springer Berlin Heidelberg, Berlin, Heidelberg, XP055100632, ISSN: 0302-9743 ISBN: 978-3-54-045234-8 Bd. 2969, Seiten 17-39, DOI: 10.1007/978-3-540-25928-2_3, Seite 29 - Seite 34**

EP 2 898 382 B1

**Beschreibung**

Technisches Gebiet

Die vorliegende Beschreibung betrifft ein Verfahren zur autonomen Inspektion oder Bearbeitung von Bodenflächen, insbesondere zum Inspizieren oder Bearbeiten beispielsweise mittels eines autonomen Roboters.

Hintergrund

Zahlreiche selbstfahrende Roboter zur Reinigung bzw. Bearbeitung von Bodenflächen sind bekannt und käuflich erhältlich. Grundsätzlich soll eine möglichst vollständige Bearbeitung der Bodenfläche in möglichst kurzer Zeit erreicht werden. Bei einfachen Systemen werden zufällige Navigationsverfahren verwendet (z.B. EP 2287697 A2 von iRobot Corp.), welche ohne Erstellung bzw. Verwendung einer Karte der Umgebung, in der sich die zu bearbeitende Bodenfläche befindet, auskommen. Das heißt, es wird keine Ortsinformation betreffend Hindernisse, Bodenflächenbegrenzungen, gereinigte/nicht gereinigte Bereiche, etc. verwendet. In Kombination mit lokalen Bewegungsstrategien wird bei einer Kollision mit einem Hindernis lediglich die Fahrtrichtung (zufällig) geändert. Dadurch nimmt man z.B. eine mehrfache Reinigung von Bodenflächen in Kauf ohne (in endlicher Zeit) eine Garantie für eine vollständige Reinigung der Bodenfläche abgeben zu können.

Kompliziertere Systeme erstellen eine Karte der Umgebung zur gezielten Pfadplanung und gezielten Reinigung der Bodenfläche mittels eines SLAM-Algorithmus (SLAM: "Simultaneous Localization and Mapping", "simultane Lokalisierung und Kartenerstellung"). Hierbei wird eine Karte und die Position des Roboters in der Karte mittels Sensoren wie z.B. Laser-Range-Scanner, Triangulation mittels Kamera und Laser, Berührungssensoren, odometrische Sensoren, Beschleunigungssensoren, etc. ermittelt. Bei neueren Reinigungsrobotern, welche ein derartiges SLAM-Modul verwenden, ist die erstellte Karte nicht-permanent, d.h. eine neue Karte wird für jeden neuen Reinigungsvorgang (d.h. nach Abschluss eines vorangegangen Reinigungsvorgangs) erstellt. Bei derartigen Systemen werden dem Nutzer meist keine kartenbasierten Informationen (z.B. was wurde auf welche Art und Weise gereinigt) mitgeteilt und der Nutzer hat keinen Einfluss auf die interne Verwendung der Karte (z.B. auf eine Einteilung der Bodenfläche in zu bearbeitende und nicht zu bearbeitende Bereiche).

Im Gegensatz zu nicht-permanenten Karten ermöglicht die Verwendung permanent abgespeicherter Karten effizientere Bearbeitungsvorgänge, da eine wiederholte Erkundung der Umgebung nicht notwendig ist. Ein Bearbeitungsvorgang kann somit im Vornherein berechnet werden. Dabei können zusätzliche kartenbasierte Informationen ermittelt und wieder verwendet werden (z.B. Problembereiche, stark verschmutzte Bereiche, etc.). In der EP 1 967 116 A1 wird beispielsweise der Verschmutzungsgrad einer Bodenfläche ermittelt und in der Karte gespeichert, um bei nachfolgenden Bearbeitungszyklen die Bearbeitungsintensität (z.B. Dauer, Häufigkeit, etc.) entsprechend anzupassen. In der US 6,667,592 B2 von Intellibot wird beispielsweise eine gespeicherte/permanente Karte dazu verwendet, (eventuell unterschiedliche) Funktionen (z.B. saugen, wischen) einzelnen Teilbereichen einer Karte zuzuordnen, welche dann von einem Reinigungsgerät autonom abgearbeitet werden können. In der US 2009/0182464 A1 von Samsung wird die verfügbare Karte in Teilbereiche zerlegt, welche nachfolgend sequentiell gereinigt werden.

Häufig sind jedoch die in dem zu reinigenden Gebiet gegebenen Umstände von einem Bearbeitungsvorgang zum nächsten veränderbar. So können sich beispielsweise Personen oder unbekannte Gegenstände (z.B. Schuhe oder Taschen) im zu reinigenden Gebiet befinden oder Möbel verstellt werden. Dies macht es schwer für den Roboter, vollkommen autonom die Bearbeitung durchzuführen. Aus diesem Grund ist bei vielen Systemen eine Interaktion zwischen Nutzer und Roboter vorgesehen. Dabei ist es hilfreich, wenn der Roboter gezielt Hilfe vom Nutzer anfordert, wenn er beispielsweise veränderte Umstände detektiert.

In der US 5,995,884 A ist ein Reinigungssystem beschrieben, welches die Erweiterung eines Computers darstellt. Der Computer verwaltet eine permanente Karte die er aktualisieren kann. Die Karte dient als Basis für die Reinigung. Der Computer stellt ein Interface zum Nutzer dar, mittels welchem Nachrichten über mögliche Hindernisse ausgegeben werden können.

Es sind auch Verfahren bekannt, mittels welcher Bereiche die während eines Bearbeitungsvorganges nicht zugänglich sind ausgelassen und zu einem späteren Zeitpunkt im gleichen Bearbeitungsvorgang oder in einem darauf folgenden Bearbeitungsvorgang nachgeholt werden können. Ein solches Verfahren ist beispielsweise in der WO 03/014852 A1 beschrieben.

In der US 2010/0313364 A1 wird ein Roboter beschrieben, der Gebiete, die er während einer Bearbeitungsfahrt möglicherweise nicht bearbeitet hat in einer Nachbearbeitungsfahrt nachreinigen kann.

In der US 2011/0264305 wird ein Verfahren beschrieben, bei dem ein Reinigungsroboter eine Karte über das zu reinigende Gebiet an ein externes Gerät übermittelt und auf diese Art und Weise eine Interaktion mit dem Nutzer zulässt.

Der Nutzer hat jedoch meist entweder keinen Einfluss auf das Verhalten des Roboters bei eventuellen Unregelmäßigkeiten oder nicht zugänglichen Bereichen, z.B. bei Robotersystemen die ganz ohne oder nur mit temporären Karten arbeiten, oder der Nutzer muss dem Roboter für jede festgestellte Unregelmäßigkeit vorgeben, wie weiter vorgegangen werden soll.

Zu häufige Interaktion oder wiederholte Interaktion zu ein und demselben Problem wird dabei vom Nutzer häufig als störend empfunden. Eine zu geringe oder fehlende Interaktion hingegen wird häufig als zu geringe Intelligenz des Roboters interpretiert.

Die der Erfindung zugrunde liegende Aufgabe besteht nun darin einen autonomen Roboter zur Verfügung zu stellen, der die Interaktion an die Bedürfnisse und Wünsche des Nutzers sowie an das Aufgabengebiet des Roboters anpasst.

Zusammenfassung der Erfindung

Diese genannte Aufgabe wird durch einen mobilen Roboter gemäß Anspruch 1 sowie ein Verfahren gemäß Anspruch 15 gelöst. Unterschiedliche Beispiele und Weiterentwicklungen der Erfindung sind Gegenstand der abhängigen Ansprüche.

Im Folgenden wird ein mobiler, selbstfahrender Roboter zum autonomen Ausführen von Tätigkeiten beschrieben. Der Roboter weist gemäß einem Beispiel der Erfindung folgendes auf: ein Antriebsmodul zur Bewegung des Roboters über die Bodenfläche; ein Bearbeitungsmodul zum Ausführen der Tätigkeiten während eines Bearbeitungsvorganges; ein Navigationsmodul, welches dazu ausgebildet ist, den Roboter während des Bearbeitungsvorganges anhand einer Karte der Umgebung über die Bodenfläche zu navigieren, und eine oder mehrere Karten der Umgebung abzuspeichern und zu verwalten. Der Roboter umfasst des Weiteren mindestens ein Sensormodul zum Erfassen von Informationen betreffend die Struktur der Umgebung; eine Analyseeinheit, welche dazu ausgebildet ist, die bei einem Bearbeitungsvorgang bearbeitete Fläche zu bestimmen, diese mit einer Referenz zu vergleichen und Informationen über eine Abweichung zwischen der Referenz und der tatsächlich bearbeiteten Fläche zu speichern, und ein Kommunikationsmodul, welches dazu ausgebildet ist, während, nach Abschluss oder nach Unterbrechung des Bearbeitungsvorganges eine Verbindung mit einer Mensch-Maschine-Schnittstelle herzustellen, um die gespeicherten Informationen über eine Abweichung zwischen der Referenz und der tatsächlich bearbeiteten Fläche mitzuteilen und damit einem Nutzer die Möglichkeit zu geben in den Bearbeitungsvorgang einzugreifen, Veränderungen der Umgebung vorzunehmen oder einen erneuten Bearbeitungsvorgang zu starten, wobei anhand bestimmter, vordefinierbarer Kriterien entschieden wird, ob die gespeicherten Informationen über die Abweichung zwischen der Referenz und der tatsächlich bearbeiteten Fläche nach Aufforderung durch den Nutzer, ohne Aufforderung, oder gar nicht mitgeteilt werden sollen. Das Kommunikationsmodul ist weiter dazu ausgebildet, einen Steuerbefehl von dem Nutzer entgegenzunehmen, den Bearbeitungsvorgang zu unterbrechen, fortzusetzen, zu modifizieren oder neu zu beginnen.

Des Weiteren wird ein korrespondierendes Verfahren zur automatischen Ausführung von Tätigkeiten mit Hilfe eines selbstfahrenden, autonomen Roboters beschrieben. Das Bearbeitungsmodul muss nicht zwangsläufig die Bodenfläche Bearbeiten. Reine Inspektion- oder Transportaufgaben können ebenso durchgeführt werden. Es müssen nicht alle genannten Module explizit in dem mobilen Roboter integriert sein. Beispielsweise kann die Analyseeinheit auch auf einem stationären Computer implementiert sein, der mit dem mobilen Roboter (z.B. über Funk) kommunizieren kann.

Die im Zusammenhang mit der Bearbeitung einer Bodenfläche beschriebenen Beispiele und technischen Merkmale des mobilen Roboters sind, wie erwähnt, auch auf einen mobilen Roboter zur Ausführung anderer oder zusätzlicher Tätigkeiten übertragbar. Die vom beschriebenen mobilen Roboter ausgeführten Tätigkeiten können beispielsweise die Bearbeitung von Bodenflächen, die Inspektion der Bodenfläche oder der Umgebung, den Transport von Gegenständen, die Reinigung von Luft und/oder das Ausführen von Unterhaltungsspielen umfassen. Ein Bearbeitungsmodul ist beispielsweise bei alleiniger Verwendung zur Inspektion nicht zwingend notwendig.

Kurze Beschreibung der Abbildungen

Figur 1    beispielhaft eine schematische isometrische Darstellung eines selbstfahrenden Roboters zur autonomen Reinigung von Bodenflächen;

Figur 2    anhand eines Blockschaltbildes beispielhaft den Aufbau eines Roboters zum autonomen Bearbeiten von Bodenflächen;

Figur 3    eine beispielhafte Darstellung eines selbstfahrenden Roboters zur autonomen Reinigung von Bodenflächen an verschiedenen Positionen in einem zu reinigenden Gebiet; und

Figur 4    eine beispielhafte Darstellung eines selbstfahrenden Roboters zur autonomen Reinigung von Bodenflächen in einem zu reinigenden Gebiet, welches Unregelmäßigkeiten aufweist;

Figur 5    anhand eines Blockschaltbildes beispielhaft den Aufbau eines erfindungsgemäßen Roboters zum autonomen Bearbeiten von Bodenflächen;

Figur 6    beispielhaft anhand eines Flussdiagramms ein Verfahren zur Bearbeitung von Bodenflächen mit Nutzerinteraktion.

Detaillierte Beschreibung

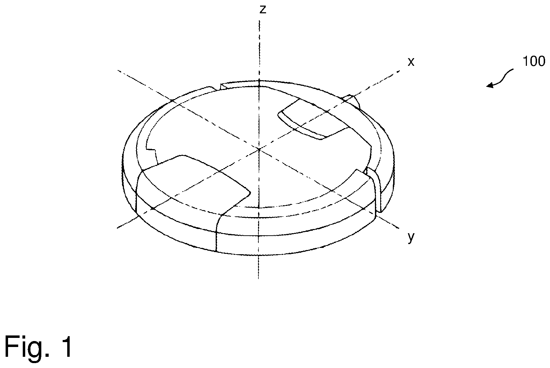

Figur 1 zeigt beispielhaft eine schematische isometrische Darstellung eines selbstfahrenden Roboters 100 zur autonomen Reinigung von Bodenflächen. Die Figur 1 zeigt auch ein kartesisches Koordinatensystem mit dem Ursprung in der Mitte des Roboters 100. Derartige Geräte sind häufig - jedoch nicht notwendigerweise - scheibenförmig ausgebildet. Die Hochachse z geht durch das Zentrum der Scheibe. Die longitudinale Achse ist mit x bezeichnet und die transversale Achse mit y.

Der Roboter 100 umfasst ein Antriebsmodul (nicht dargestellt), welches z.B. Elektromotore, Getriebe und Räder aufweisen kann. Das Antriebsmodul kann z.B. dazu ausgebildet sein, den Roboter in Vorwärts- und Rückwärtsrichtung zu bewegen (in der Darstellung aus Fig. 1 wäre das entlang der x-Achse) und um die Hochachse zu drehen (in der Darstellung aus Fig. 1 wäre das die z-Achse). Somit kann der Roboter - theoretisch - jeden Punkt einer Bodenfläche (die parallel zu der durch die x-Achse und y-Achse definierten Ebene liegt) anfahren. Der Roboter umfasst des weiteren ein Bearbeitungsmodul, wie z.B. ein Reinigungsmodul, das dazu ausgebildet ist, die unter (und/oder neben) dem Roboter befindliche Bodenfläche zu reinigen. Beispielsweise werden Staub und Schmutzpartikel in einen Auffangbehälter gesaugt oder auf mechanische (oder irgendeine andere Weise) in diesen befördert. Derartige Roboter sind - als solche - bekannt und unterscheiden sich im Wesentlichen durch die Art der Navigation in der Umgebung und die "Strategie", die bei der Bearbeitung der Bodenfläche, wie z.B. bei einem Reinigungsvorgang, angewandt wird.

Es sind Roboter bekannt, welche ohne Erstellung bzw. Verwendung einer Karte auskommen. Bei derartigen, verhältnismäßig einfachen, Systemen werden in der Regel zufällige Navigationsverfahren verwendet. Es werden keine ortsbezogenen Informationen wie beispielsweise Informationen bezüglich Hindernissen oder Orientierungspunkten abgespeichert und während den Bearbeitungsvorgängen wieder verwendet. In Kombination mit lokalen Bewegungsstrategien wechseln solche Roboter in der Regel bei Kollision mit einem Hindernis (zufällig) die Fahrtrichtung. Auf diese Weise werden Bodenflächen in einem zu reinigenden Gebiet teilweise mehrfach gereinigt, während andere Bodenflächen möglicherweise gar nicht gereinigt werden.

Aus diesem Grund wurden kompliziertere, "smarte" Systeme entwickelt, welche eine Karte der Umgebung und gleichzeitig die entsprechende Position des Roboters in dieser Karte ermitteln um dadurch den Roboter möglichst selbstständig zu machen und um ein möglichst gutes Reinigungsergebnis zu erzielen, so dass ein Nacharbeiten durch den Nutzer nur in geringem Maße oder gar nicht notwendig ist. Derartige Verfahren sind bekannt und werden als SLAM-Verfahren bezeichnet (engl.: Simultaneous Localization and Mapping, deutsch: simultane Lokalisierung und Kartenerstellung, siehe z.B. H. Durrant-Whyte and T. Bailey: "Simultaneous Localization and Mapping (SLAM): Part I The Essential Algorithms," in: IEEE Robotics and Automation Magazine, Bd. 13, Nr. 2, S. 99-110, Juni 2006). Auf diese Weise wird eine gezielte Navigation ermöglicht. Die Karte und die Position des Roboters in der Karte kann dabei mittels einem oder mehrerer Sensoren ermittelt werden. Bei einigen bekannten Systemen wird für jeden neuen Reinigungsvorgang eine neue Karte erstellt, die Karten sind also nicht permanent.

Mit Systemen, bei denen die durch den Roboter erstellten Karten permanent gespeichert und für nachfolgende Reinigungsvorgänge wieder verwendet werden, sind im Vergleich zu Systemen mit temporären Karten effizientere Bearbeitungsvorgänge möglich, da eine wiederholte Erkundung der Umgebung nicht notwendig ist. Zusätzlich können kartenbasierte Informationen ermittelt und wieder verwendet werden. So können beispielsweise stark verschmutzte Bereiche in der Karte markiert, und bei einem folgenden Reinigungsvorgang besonders behandelt werden. Auch benutzerspezifische Informationen wie beispielsweise Zimmerbezeichnungen können übernommen werden. Gemäß den hier beschrieben Beispielen der Erfindung kann der Nutzer auf den Bearbeitungsvorgang Einfluss nehmen, insbesondere dadurch, dass er auf Mitteilungen des Roboters betreffend den Bearbeitungsvorgang oder betreffend die Umgebung reagiert. Diese Interaktionsmöglichkeit bzw. der damit verbundenen Nutzen für den Benutzer soll dafür sorgen, die Akzeptanz derartiger Roboter bei den Verbrauchern zu erhöhen.

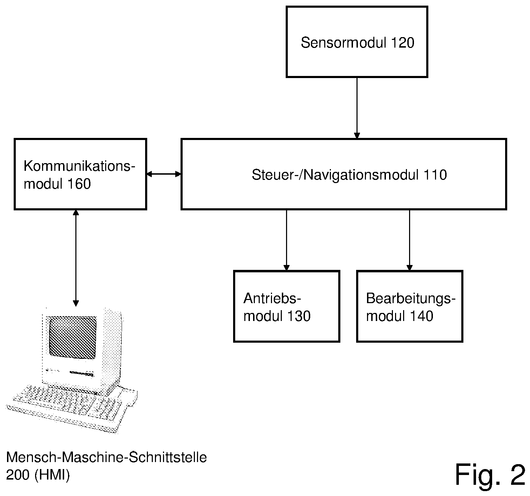

Figur 2 ist ein Blockschaltbild, das den schematischen Aufbau eines Beispiels eines Roboters 100 zum autonomen Bearbeiten (z.B. Reinigen) von Bodenflächen illustriert. Es sind ein Antriebsmodul 130 und ein Bearbeitungsmodul 140 dargestellt, die bereits oben erwähnt wurden. Beide Module 130 und 140 werden von einem Steuer- und Navigationsmodul 110 kontrolliert. Das Navigationsmodul 110 ist dazu ausgebildet, den Roboter während eines Reinigungsvorganges anhand einer Karte der Umgebung über die Bodenfläche zu navigieren. Die Karte ist dabei in einem Speicher des Steuer- und Navigationsmoduls 110 in Form von Kartendaten (map data) abgelegt. Zur Navigation in der Umgebung sind unterschiedliche Strategien zur Planung der Soll-Trajektorie des Roboters bekannt. Im Allgemeinen wird versucht, mit einer möglichst kurzen Trajektorie (Pfad) die zu bearbeitende (z.B. zu reinigende) Bodenfläche möglichst vollständig abzudecken, um eine flächendeckende Bearbeitung (z.B. Reinigung) zu gewährleisten.

Der Roboter 100 umfasst weiter ein Sensormodul 120 zum Erfassen von Informationen betreffend die Struktur der Umgebung und/oder betreffend Eigenschaften der Bodenfläche. Zu diesem Zweck kann das Sensormodul eine oder mehrere Sensoreinheiten aufweisen, die dazu ausgebildet sind, Informationen zu erfassen, auf deren Basis eine Karte der Umgebung aufgebaut und die Position des Roboters auf der Karte lokalisiert werden kann. Zu diesem Zweck geeignete Sensoren sind z.B. Laser-Range-Scanner, Kameras, Triangulationssensoren, Berührungssensoren zum Erkennen eines Zusammenstoßes mit einem Hindernis, etc. Zum Aufbau der Karte und zur gleichzeitigen Positionsbestimmung des Roboters innerhalb der Karte kann, wie bereits beschrieben, ein SLAM-Verfahren eingesetzt werden. Die so neu aufgebaute (temporäre) Karte und die dieser entsprechende permanente Lokalisierungskarte können zusammengeführt werden, um mögliche Unterschiede zu erkennen. Erkannte Unterschiede können z.B. auf ein Hindernis hindeuten. In einem Raum befindliche Personen können z.B. bewegte Hindernisse darstellen (siehe weiter unten).

Mittels eines Kommunikationsmoduls 160 kann eine Kommunikationsverbindung zu einer Mensch-Maschine-Schnittstelle 200 (human machine interface, HMI) hergestellt werden. Als Mensch-Maschine-Schnittstelle 200 kommt dabei ein Personal Computer (PC) in Betracht, es kann sich jedoch auch nur um ein einfaches Display am Robotergehäuse oder um ein Mobiltelefon oder Smart-Phone handeln. Auch ein externer Bildschirm wie z.B. ein Fernsehgerät kann Teil der Mensch-Maschine-Schnittstelle 200 sein. Gemäß einem Beispiel der Erfindung ermöglicht es die Mensch-Maschine-Schnittstelle 200 dem Roboter, Informationen betreffend den Bearbeitungsvorgang oder betreffend die Umgebung (d.h. Karteninformationen) an den Nutzer zu melden und von dem Nutzer eine Rückmeldung (d.h. Nutzerfeedback) einzufordern. Der Nutzer kann beispielsweise über einen PC oder über eine am Robotergehäuse angeordnete Taste einen Steuerbefehl eingeben. Selbstverständlich sind auch andere Varianten einer Mensch-Maschine-Kommunikation bekannt. Diese Mensch-Maschine-Schnittstelle 200 ermöglicht, gespeicherte Informationen mit den korrespondierenden Positionen in der Karte für einen Nutzer darzustellen, und gibt damit diesem die Möglichkeit, in den Bearbeitungsvorgang (oder alternativ einen Inspektionsvorgang) einzugreifen oder Veränderungen der Umgebung vorzunehmen. Die Mensch-Maschine-Schnittstelle 200 ermöglicht durch die Eingabe eines Steuerbefehls durch den Nutzer, den Bearbeitungsvorgang (oder den Inspektionsvorgang) abzubrechen, zu modifizieren, fortzusetzen oder neu zu beginnen.

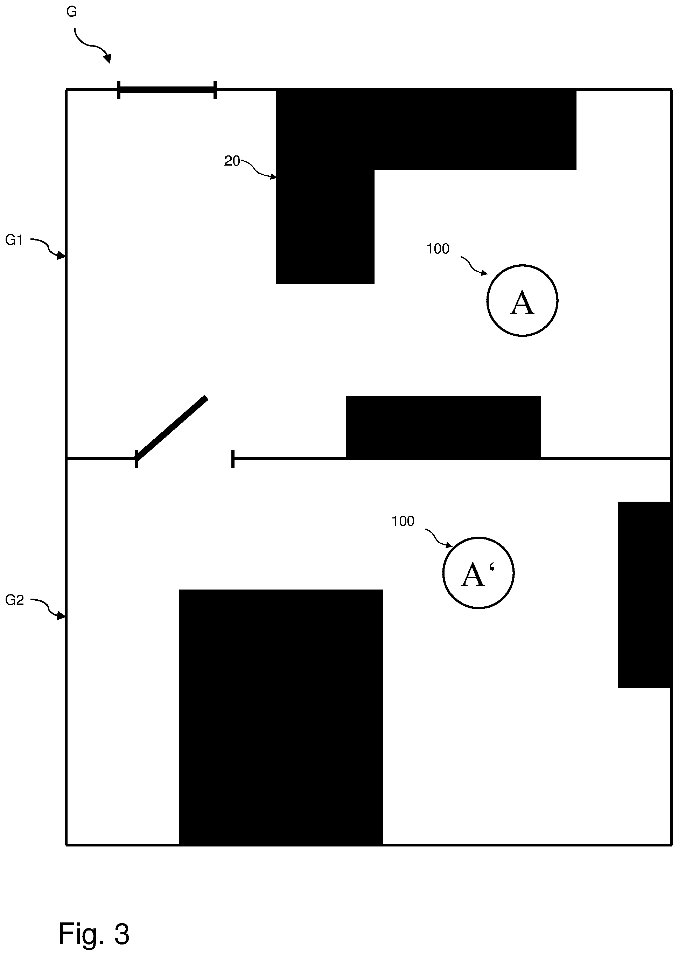

Figur 3 zeigt beispielhaft einen autonomen Roboter 100 an einer Position A innerhalb eines zu reinigenden Gebietes G. Das zu reinigende Gebiet G unterteilt sich dabei in verschiedene Zimmer G1 und G2, welche durch eine Tür miteinander verbunden sind. In den einzelnen Zimmern G1, G2 können sich dabei verschiedenartige Gegenstände (schwarze Flächen) befinden. In einer vom Roboter 100 gespeicherten Karte kann die gesamte zu reinigende Fläche G mit den darin befindlichen Gegenständen gespeichert sein. Bei einem Bearbeitungsvorgang kann der Roboter 100 dann das zu reinigende Gebiet G anhand der Karte bearbeiten.

Bei einem normalen Bearbeitungsvorgang wird der Roboter das gesamte zu reinigende Gebiet G bearbeiten können, bis auf die Bereiche unter den Gegenständen. Er kann sich somit beispielsweise von der Position A in die Position A' bewegen um auch im zweiten Zimmer G2 die Bearbeitung durchzuführen.

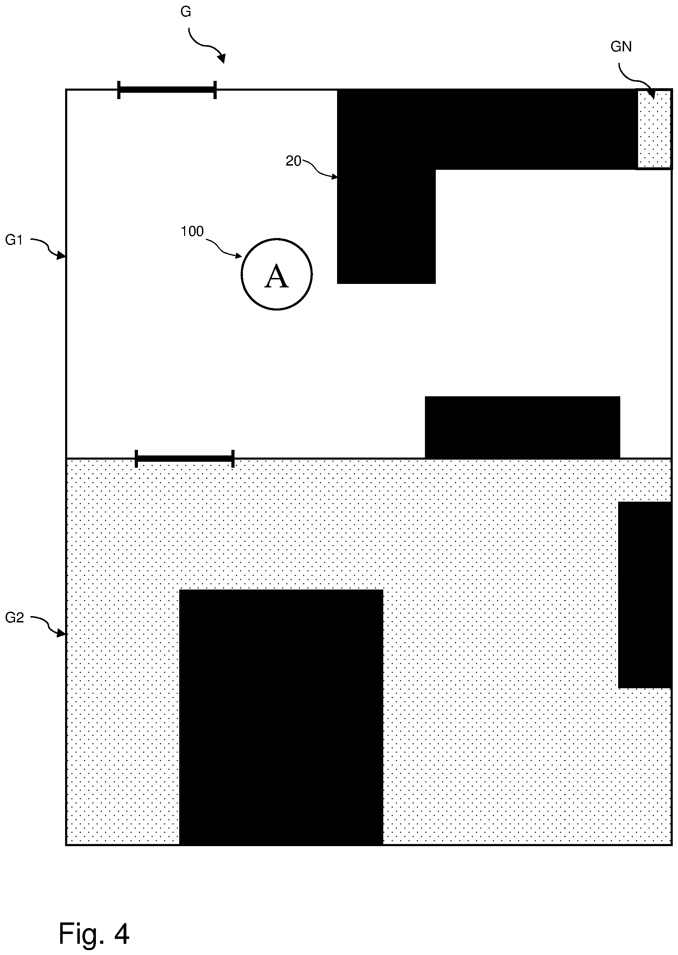

Es kann jedoch vorkommen, dass beispielsweise Gegenstände verschoben werden, Teilgebiete versperrt sind oder sich unbekannte, nicht in der Karte verzeichnete Gegenstände im zu reinigenden Gebiet G befinden. Dies ist beispielhaft in Figur 4 dargestellt. In dieser Darstellung ist ein Gegenstand 20 im ersten Zimmer G1 derart verschoben (im Vergleich zu Figur 3), dass eine Bearbeitung des Bereiches GN (gepunktet dargestellt) für den Roboter 100 nicht mehr möglich ist. Zudem ist die Tür zum zweiten Zimmer G2 geschlossen, so dass der Roboter 100 dieses Zimmer G2 (ebenfalls gepunktet dargestellt) nicht befahren kann und eine Bearbeitung somit nicht möglich ist.

Die Sensoreinheiten, welche die zum Aufbau der Karte notwendigen Umgebungsinformationen liefern, können beispielsweise dazu verwendet werden, auf einer vorhandenen Karte (noch nicht verzeichnete) Hindernisse zu erkennen. Berührungssensoren können eine Kollision detektieren, über Stromsensoren zur Messung des Laststromes der Antriebseinheit kann z.B. erkannt werden, wenn der Roboter (z.B. an den Fransen eines Teppichs) festhängt. Andere Sensoreinheiten können z.B. ein Feststecken des Roboters dadurch detektieren, dass die Antriebsräder durchdrehen. Es können weitere Sensoreinheiten vorgesehen sein, die z.B. dazu ausgebildet sind, den Verschmutzungsgrad des Bodens zu ermitteln. Die erfassten Umgebungsinformationen können zusammen mit einer der jeweiligen Information zugeordneten Position des Roboters auf der Karte an das Steuer- und Navigationsmodul 110 übermittelt werden. Plötzlich an einer Stelle "auftauchende" und nach kurzer Zeit wieder "verschwindende" Hindernisse können auf eine Bewegung im Raum hindeuten, insbesondere auf Personen, die sich im Raum bewegen. Der Roboter kann so z.B. erkennen, ob sich in einem Raum Personen bewegen und er kann insbesondere darauf reagieren.

Der Roboter 100 kann dazu ausgebildet sein, gezielt eine Interaktion mit einem Nutzer zu initiieren, um den Nutzer beispielsweise über eine unvollständige Bodenabdeckung zu informieren und es diesem zu ermöglichen, die Umstände für die unvollständige Abdeckung zu beseitigen und dem Roboter beispielsweise mitzuteilen, welche der nicht bearbeiteten Teilbereiche nochmals einem Bearbeitungsversuch unterzogen werden sollen. Zu häufige Interaktion kann dabei vom Nutzer jedoch leicht als störend empfunden werden.

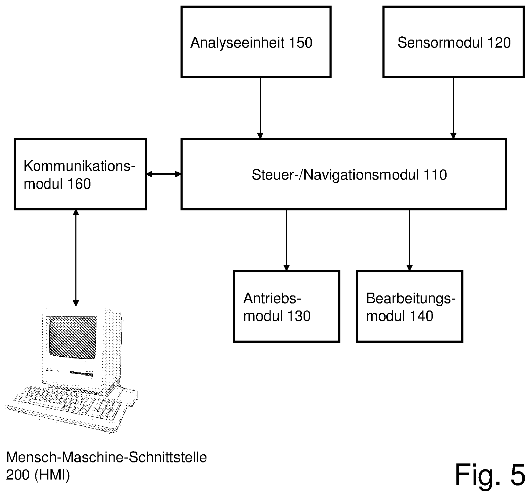

Figur 5 zeigt ein weiteres Beispiel eines Roboters zum autonomen Bearbeiten von Bodenflächen. Der Roboter unterscheidet sich von dem in Figur 2 gezeigten Beispiel durch eine zusätzliche Analyseeinheit 150. Die Analyseeinheit 150 kann beispielsweise verschiedene Informationen verarbeiten und anhand bestimmter Kriterien entscheiden, ob eine Interaktion mit dem Nutzer initiiert werden soll oder nicht. Soll eine Interaktion initiiert werden, so kann beispielsweise auch bestimmt werden, ob eine Interaktion nur nach Aufforderung durch den Nutzer oder selbstständig durch den Roboter erfolgen soll. Das Verhalten des Roboters kann auf diese Art und Weise auf die gegebenen Umstände im zu reinigenden Gebiet G sowie auf die Wünsche und Bedürfnisse des Nutzers angepasst werden.

Die Analyseeinheit 150 kann, wie in Figur 5 dargestellt, als eigenständiges Modul implementiert sein. Sie kann aber beispielsweise auch im Navigationsmodul 110, im Kommunikationsmodul 160 oder jeder beliebigen Komponente des Roboters 100 integriert sein. Es ist zudem auch möglich, dass die Analyseeinheit 150 nicht im Roboter 100, sondern beispielsweise in der verwendeten Mensch-Maschine-Schnittstelle 200 ausgeführt ist (z.B. in einem Computer oder Smart-Phone)

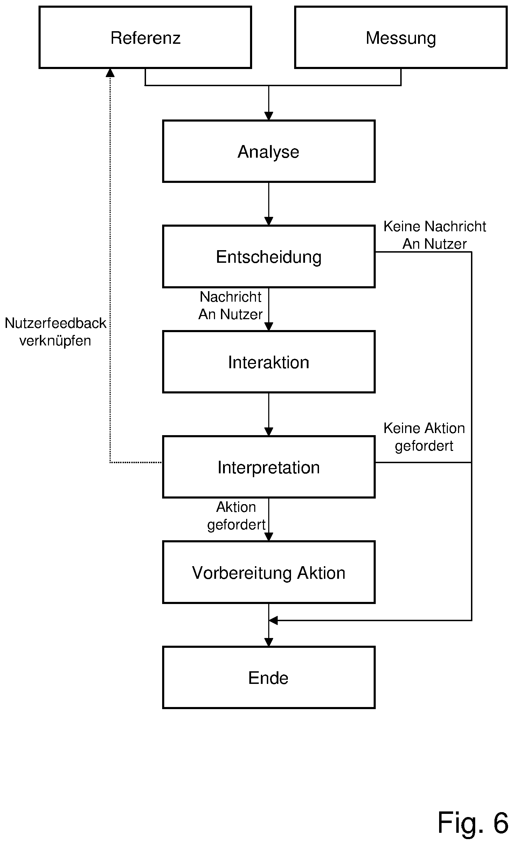

Ein Verfahren zum Anpassen des Verhaltens des Roboters ist beispielhaft in Figur 6 gezeigt. Dem Roboter kann beispielsweise zunächst eine Referenz zur Verfügung stehen. Diese kann dem Roboter das zu reinigende Gebiet sowie die gewünschte zu erreichende Abdeckung des Gebiets vorgeben. Die Referenz kann beispielsweise vorab durch einen Nutzer in Form einer Karte vorgegeben werden, in welcher die zu reinigenden Gebiete eingetragen sind. Die Referenz kann aber beispielsweise auch durch den Roboter selbst, zum Beispiel durch eine Erkundungsfahrt oder während der Durchführung von Bearbeitungsvorgängen, erstellt werden. Eine derart erstellte oder durch den Nutzer vorgegebene Referenz könnte auch, falls nötig, automatisch durch den Roboter, zum Beispiel anhand von Nutzerinteraktionen, angepasst werden.

Eine Referenz in Form einer Karte könnte beispielsweise eine so genannte Feature-Karte sein, in der die Umgebung des Roboters abstrahiert aus Features zusammengesetzt wird. Diese Features können dann mithilfe von Logik-Regeln zu Objekten zusammengefügt werden. Derartige Objekte können beispielsweise Zimmer oder in einem Zimmer befindliche Gegenstände sein. Sobald eine solche Karte zur Verfügung steht kann beispielsweise vor einem Bearbeitungsvorgang eine zu erreichende Fläche berechnet werden. Mittels Pfadplanung können beispielsweise alle Punkte in einem Raum auf Erreichbarkeit von einer momentanen Roboterposition aus überprüft werden.

Bei einem Bearbeitungsvorgang kann der Roboter dann eine Messung der tatsächlich bearbeiteten Fläche durchführen. Bei dieser Messung kann beispielsweise die abgefahrene Fläche mitprotokolliert werden. Dies kann beispielsweise anhand der gespeicherten Karte erfolgen, aber zum Beispiel auch anhand einer neu erstellten Karte, welche mit der vorhandenen Karte verglichen werden kann. Der Kartentyp, welcher bei der Messung erstellt wird kann dem Kartentyp der gespeicherten Karte angepasst sein. Beispielsweise können lokal Gebiete mit Hilfe einer Grid-Karte (eine mit Hilfe eines Netzes (grid) diskretisierte Karte) mitgeschrieben werden und diese lokalen Gebiete mit einer Feature-Karte verknüpft werden. Dies kann beispielsweise dadurch erfolgen, indem die lokalen Gebiete in "Features" (z.B. durch eine Linie oder Polygonzüge angenäherte Beschreibungen des lokalen Gebiets) umgewandelt werden und in die Feature-Karte eingefügt werden (im einfachsten Fall die Endpunkte einer Linie und die Information, dass diese Punkte zu einer Linie gehören). Es ist jedoch beispielsweise auch ein einfaches Mitprotokollieren in einer vorhandenen Grid-Karte möglich, indem zum Beispiel jeder Gridpunkt, dessen äquivalente Fläche bearbeitet wurde als bearbeitet markiert wird.

Neben der Messung der Bodenabdeckung, was im Wesentlichen durch ein Mitprotokollieren der bearbeiteten Fläche erfolgt können während der Bearbeitung weiter Hindernisse erkannt werden. Des weiteren kann die Umgebung weiter "gescannt" werden, um neue Objekte zu erkennen. So kann beispielsweise eine Tür durch Objekterkennung, zum Beispiel durch Erkennung der Türschnalle und unter Zuhilfenahme einer Bilddatenbank, als solche erkannt werden. Detektierte Objekte können in der Karte eingetragen werden.

Eine unvollständige Bearbeitung eines zu bearbeitenden Gebiets kann beispielsweise durch den Roboter selbst hervorgerufen werden, indem er beispielsweise selbstständig die Bearbeitung eines Gebiets oder Teilgebiets abbricht. Dies kann beispielsweise der Fall sein, wenn der Roboter (zu viele) Menschen in einem Bereich detektiert, welche seine Bearbeitung stören oder die der Roboter durch seine Bearbeitung stören könnte. Die Gründe, warum der Roboter die Bearbeitung eines Gebiets abbricht können ebenfalls mit der Karte verknüpft werden. Eine solche Verknüpfung kann beispielsweise dadurch erreicht werden, dass entsprechende Objekte (z.B. ein Raum, ein Teil eines Raumes, ein Möbelstück), welche beispielsweise aus Features bestehen, mit Gründen verknüpft werden.

Die durchgeführte Messung der bei einem Bearbeitungsvorgang erzielten Bodenabdeckung kann als Grundlage für eine nachfolgende Analyse dienen. In einer nachfolgenden Analyse können beispielsweise die Referenz und eine durchgeführte Messung miteinander verglichen werden. Die vorhandenen Daten können dabei aufbereitet werden und relevante (interessierende) Parameter (z.B. die gereinigten Flächen, nicht gereinigte Bereiche, Gründe für die Nichtreinigung) können extrahiert werden. Die Durchführung eines solchen Vergleichs kann auf verschiedenste Arten erfolgen und kann beispielsweise am Ende eines Bearbeitungsvorgangs und/oder zu einem oder mehreren Zeitpunkten während eines Bearbeitungsvorgangs durchgeführt werden. Wird der Vergleich während eines Bearbeitungsvorgangs durchgeführt, so beschränkt sich der Vergleich auf die Bereiche, für die die Bearbeitung bereits abgeschlossen wurde. Hierfür kann das zu bearbeitende Gebiet, sowohl in der Referenz, als auch in der aktuellen Messung, in Teilbereiche segmentiert werden. Ein Vergleich kann beispielsweise dann gestartet werden, wenn die Bearbeitung eines Teilbereichs abgeschlossen ist.

Zur Durchführung des Vergleichs sind verschiedenste Algorithmen bekannt. Derartige Algorithmen können beispielsweise ein Gridpunkt zu Gridpunkt-Vergleich, zum Beispiel bei Verwendung einer Referenz- und Resultate-Gridkarte, oder eine Einbindung von regelbasierter Logik sein, um komplexe Zusammenhänge erfassen zu können. Ein Vorteil einer komplexeren Analyse ist beispielsweise, dass die aktualisierte Messkarte nach jedem (Teil-)Messvorgang erneut interpretiert werden kann. So kann zum Beispiel aufgrund von logischen Regeln in einer Feature-Karte nachträglich ein Hindernis beispielsweise als geschlossene Tür interpretiert werden, wenn das Hindernis zum Beispiel den Durchgang zu einem Raum komplett blockiert hat. Somit kann beispielsweise ohne Nutzung einer Objekterkennung, eine geschlossene Tür anhand von Logik erkannt werden oder die Detektion einer Tür in einem vorangegangenen Messschritt verifiziert werden.

Bei der Analyse können beispielsweise Flächen nach Kostenfunktionen beurteilt werden. Im Falle eines Reinigungsroboters kann beispielsweise für die i-te Teilfläche $A_i$ das Produkt aus erwarteter Schmutzaufnahme $S_i$ (kann aus vorangegangenen Bearbeitungsvorgängen bekannt sein) und (unbearbeiteter) Teilfläche $A_i$ berechnet werden, woraus sich ein möglicher Teil-Reinigungsgewinn $R_i$ wie folgt ergibt:

$$R_i = A_i \cdot S_i \cdot W_i, \qquad\qquad\qquad (1)$$

wobei $W_i$ ein der i-ten Teilfläche $A_i$ zugeordnetes Gewicht ist (siehe unten). Setzt man (per Definition) z.B. für alle Teilflächen $S_i=1$ erhält man als Spezialfall des Reinigungsgewinns den Flächengewinn. Den integralen (gesamten) Reinigungsgewinn R erhält man durch Aufsummieren der Teil-Reinigungsgewinne $R_i$ für alle Flächen $A_i$ und alle Indizes i in der Menge I:

$$R = \Sigma_{i \in I}\ R_i \ldots \qquad\qquad\qquad (2)$$

Eine üblicherweise stark verschmutze Fläche hat damit einen höheren Reinigungsgewinn als eine Fläche, die normalerweise wenig verschmutzt ist. Die "Kosten" für eine Nichtreinigung sind bei einer Fläche mit hohem Reinigungsgewinn daher hoch. Der Reinigungsgewinn ist ein Beispiel für eine allgemeine Kostenfunktion die der Roboter minimieren soll. Es wäre also alternativ oder zusätzlich auch möglich, ein Bearbeitungsrisiko einer Fläche mit einzuberechnen. Ein Risiko könnte beispielsweise das Steckenbleiben des Roboters auf einem rutschigen oder glatten Untergrund sein. Dieses Risiko könnte z.B. über durch Anpassen der Gewichtungsfaktoren (welche normalerweise auf 1 gesetzt werden können) berücksichtigt werden. Die Kostenfunktion kann als Kriterium herangezogen werden, um zu entscheiden, ob eine Information betreffend den Bearbeitungsvorgang, ein Hindernis, einem erkannten Objekt oder dgl. grundsätzlich erst nach Aufforderung durch den Nutzer, ohne Aufforderung, oder dem Nutzer gar nicht mitgeteilt werden soll.

Derartige Kostenfunktionen können beispielsweise durch vorangegangenes Nutzerfeedback adaptiert und angepasst werden. So kann beispielsweise bei wiederholter vorangegangener Nutzereingabe, dass kleine unbearbeitete Teilbereiche keinem nochmaligen Bearbeitungsversuch unterzogen werden sollen, zu einer Verringerung (z.B. durch die Gewichtungsfaktoren $W_i$) des errechneten möglichen Gewinns bei kleinen Flächen führen.

Wird beispielsweise der Bereich einer Wohnung unter einem Esstisch häufig durch Stühle verstellt und ist damit dem Roboter nicht zugänglich, könnte der Nutzer dem Roboter mitteilen, dass er nicht mehr wünscht auf diesen Bereich aufmerksam gemacht zu werden. Häufig ist in Wohnräumen jedoch die Lage von Stühlen und Sesseln von einem Bearbeitungsvorgang zum nächsten sehr unterschiedlich. So kann bei einem Bearbeitungsgang der Bereich unter dem Esstisch versperrt, bei einem darauffolgenden Bearbeitungsvorgang jedoch teilweise oder komplett möglich sein. Durch die Analyse kann beispielsweise sichergestellt sein, dass dieser Bereich bei jedem Bearbeitungsvorgang als Essbereich wiedererkannt wird, um zuverlässig zu verhindern, dass der Nutzer nicht informiert wird.

In einer Feature-Karte welche in Objekte segmentiert ist, ist dies beispielsweise dadurch möglich, dass dem abstrakten Objekt "Bereich unter dem Esstisch" eine sehr unscharfe Beschreibung von Lage, Form und Größe gegeben wird. Zusätzlich kann beispielsweise das Objekt auch mit "Stuhlhindernissen" verknüpft werden. Auf diese Weise kann der Roboter beispielsweise unerreichbare Gebiete im Wohnzimmer, die aufgrund von Stuhlhindernissen nicht zugänglich sind, als Essbereich identifizieren, welcher dem Nutzer nicht mitgeteilt wird.

In manchen Fällen kann es vorkommen, dass Bereiche, aufgrund der limitierten Informationen die der Roboter mit seinen Sensorelementen messen kann, nicht identifiziert werden können. Aus diesem Grund kann beispielsweise aus der Kostenfunktion eine Detektionswahrscheinlichkeit berechnet werden. Diese Detektionswahrscheinlichkeit kann beispielsweise mit jedem Entdecken eines Hindernisses (z.B. Stuhlhinderniss) erhöht werden. So kann das Resultat der Analyse beispielsweise auch eine statistische Beschreibung der nicht bearbeiteten Gebiete sein.

Bei der Analyse kann beispielsweise auch auf neue Informationen geschlossen werden. So kann zum Beispiel eine im Messschritt detektierte Türschnalle als Tür zu einem bisher unentdeckten (und somit unbearbeiteten) Gebiet interpretiert werden. Bei der Analyse kann beispielsweise auch berücksichtigt werden, dass nur eine Teilbearbeitung des gesamten zu bearbeitenden Gebiets gewünscht war. Dies kann beispielsweise dadurch erreicht werden, dass die Referenz entsprechend angepasst wird.

Im folgenden Schritt kann beispielsweise eine Entscheidung getroffen werden, welche Informationen dem Nutzer mitgeteilt werden und / oder welches Feedback vom Nutzer erwartet wird. Indem die Schritte der Analyse und der Entscheidung getrennt werden, kann dem Verfahren beispielsweise mehr Struktur gegeben werden und es können beispielsweise mit weniger Aufwand komplexere Verhaltensmuster erzeugt werden. Es ist jedoch beispielsweise auch möglich, Analyse und Entscheidung zusammenzufassen.

Beispielsweise mit Hilfe der bei der Analyse extrahierten Daten können bei der Entscheidung mit Hilfe vordefinierter Regeln Entscheidungen getroffen werden. In einem einfachen Fall kann beispielsweise ein Vergleich der berechneten Reinigungsgewinne mit einem Schwellwert (Sollwert, z.B. ein definierter Bruchteil des maximal möglichen Reinigungsgewinns) durchgeführt und darauf basierend eine Entscheidung getroffen werden. Es können jedoch auch komplexe Zustandsautomaten (state-machines) implementiert werden. So könnte beispielsweise zusätzlich ein Batterieladestand des Roboters bestimmt werden bevor ein Nutzer informiert wird. Der Nutzer könnte eine sofortige Nachbearbeitung einer unbearbeiteten Fläche fordern, welche möglicherweise mit dem gegebenen Batterieladestand nicht möglich ist, da dieser zu gering ist. Der Roboter könnte in einem solchen Fall den Nutzer erst informieren, wenn der Batterieladestand ausreichend für eine Nachbearbeitung ist. Es kann beispielsweise auch die aktuelle Uhrzeit berücksichtigt werden. So kann beispielsweise spät abends oder nachts von einer sofortigen Information des Nutzers abgesehen werden und diese zum Beispiel auf den folgenden Tag verschoben werden.

Es könnte beispielsweise auch überprüft werden, ob sich der Nutzer im Haus aufhält. Dies könnte beispielsweise dann möglich sein, wenn der Nutzer in einem lokalen WLAN-Netzwerk (wireless local area network) angemeldet ist, solange er sich im Haus befindet. Zusätzlich oder alternativ zu den genannten Faktoren ist noch eine Vielzahl weiterer Faktoren denkbar, anhand derer eine Entscheidung, ob und wann ein Nutzer informiert werden soll, beeinflusst werden könnte.

Bei der Interaktion werden abhängig von der getroffenen Entscheidung Daten für den Nutzer aufbereitet und an die Mensch-Maschine-Schnittstelle weitergegeben. Die Art der Darstellung der Daten kann dabei entsprechend der Art der Mensch-Maschine-Schnittstelle variieren. So kann zum Beispiel eine Karte in der die unbearbeiteten Gebiete beispielsweise farbig markiert sind nur über ein grafikfähiges Benutzerinterface wie z.B über eine Smart-Phone Applikation dargestellt werden.

Es ist auch möglich die Entscheidung des Roboters dem Nutzer auf mehrere verschiedene Arten gleichzeitig zugänglich zu machen. So könnte zum Beispiel zusätzlich zur oben genannten farblichen Hervorhebung der nicht bearbeiteten Gebiete über eine Smart-Phone Applikation auch eine Email mit einer Kurzzusammenfassung der Information geschickt werden. Darüber hinaus kann dem Nutzer, wenn möglich, der Grund für eine nicht vollständige Bearbeitung genannt werden um es beispielsweise dem Nutzer möglichst einfach zu machen die Ursachen hierfür zu beseitigen um einen erneuten Versuch der Bodenbearbeitung zu ermöglichen.

Zusätzlich zum Informationsfluss an den Nutzer kann ein Feedback vom Nutzer erwartet werden. Da die Art des gewünschten Feedbacks von der übermittelten Information abhängig sein kann, kann beispielsweise dem Nutzer auch die Art der erwarteten Antwort mitgeteilt werden. So kann beispielsweise auf eine Mitteilung "Küche konnte nicht gereinigt werden da die Türe verschlossen war. Bitte um Information sobald ich die Küche reinigen soll." lediglich eine Bestätigung erwartet werden, während auf eine Information "Bitte jene Teilbereiche markieren die ich nochmals bearbeiten soll" eine Kartendarstellung mit Teilbereichen erwartet werden kann.

Zusätzlich kann dem Nutzer beispielsweise während der Interaktion die vorangegangene Entscheidung mitgeteilt werden, indem zum Beispiel ein Teilbereich, über den der Nutzer nicht explizit informiert werden wollte in einer dargestellten Karte farblich hervorgehoben wird. Auf diese Weise kann dem Nutzer die Möglichkeit geben werden, ein vorangegangenes Feedback zu korrigieren. Der Nutzer könnte hierfür beispielsweise den entsprechenden Bereich in der Karte anwählen und einen Eintrag "Nicht melden" löschen.

Bei der Interpretation kann eine Entscheidung über eine Aktion des Roboters gefällt werden oder abhängig vom Nutzerfeedback zukünftige Entscheidungen beeinflusst werden. Bei der Interpretation kann beispielsweise bei positiver Antwort des Nutzers (Aktion gefordert) an den nächsten Block weitergegeben werden bzw. bei negativer Antwort (keine Aktion gefordert) abgebrochen werden. Es ist jedoch auch möglich die Antwort des Nutzers mit vorherigen Antworten sowie mit weiteren Regeln zu verknüpfen um einerseits zu entscheiden welche Aktion aktuell ausgeführt werden soll (z.B. vollständige oder teilweise Nachreinigung eines Teilgebietes) und andererseits Vorbereitungen für zukünftige Interaktionen zu treffen.

Teilt der Nutzer dem Roboter beispielsweise mit, für die nicht bearbeiteten Teilbereiche "später" einen neuen Bearbeitungsversuch zu starten, so könnte der Roboter warten bis der Benutzer verifizierbar nicht im Gebäude ist (z.B über eine Registrierung in einem lokalen WLAN Netzwerk) und danach einen Neu-Versuch veranlassen. Hat ein Nutzer beispielsweise zu einem wiederholten Male mitgeteilt, dass er nicht wünscht, dass Bereiche welche beispielsweise die Fläche eines Schuhs unterschreiten und im Vorzimmer lokalisiert werden nachbearbeitet werden, so könnte der Roboter die Analyse bzw. die Entscheidungsregeln entsprechend adaptieren, sodass der Nutzer zukünftig mit kleinen nicht bearbeiteten Flächen, die mit hoher Wahrscheinlichkeit von herumstehenden Schuhen im Vorzimmer herrühren nicht mehr "belästigt" wird.

Alternativ kann das Nutzerfeedback in der Referenzkarte gespeichert werden bzw. die Referenzkarte entsprechend beeinflussen. So kann beispielsweise das abstrakte Objekt "Vorzimmer" mit der Eigenschaft: "Flächen unter $27\text{cm}^2$ nicht melden" belegt werden. Genauso könnte das Vorzimmer ganz von der Meldung ausgenommen werden, indem die Referenz für das Vorzimmer auf "nicht zu reinigen" gesetzt wird.

Bei der Vorbereitung der Aktion können die vom Verfahren entschiedenen Aktionen so aufbereitet werden, dass sie der Roboter durchführen kann. Die Ausführung von Aktionen kann dabei von den Fähigkeiten des Roboters abhängen. So können in diesem Block beim Vorhandensein mehrerer nicht bearbeiteter Flächen für die ein weiterer Bearbeitungsversuch gestartet werden soll zum Beispiel die Schritte durchgeführt werden: 1. Sortieren der Flächen nach verschiedenen Kriterien (z.B Erreichbarkeit, Risiko des Bearbeitungsversuchs). 2. Pfadplanung zu den einzelnen Flächen. 3. Übergabe der Pfadliste zur Ausführung an den Roboter.

Die mögliche Funktion eines erfindungsgemäßen Roboters 100 zum autonomen Bearbeiten von Bodenflächen wird im Folgenden anhand von fünf Fallbeispielen näher erläutert.

Erstes Beispiel: Bei einem Bearbeitungsvorgang (z.B. ausgelöst durch eine entsprechende Kalendereinstellung des Nutzers) ist die Couch im Wohnzimmer derart verschoben, dass der dahinter liegende Bereich vom Roboter nicht mehr angefahren bzw. gereinigt werden kann (z.B. wurde die Couch so nahe an die Wand gerückt, dass der Roboter keinen Platz mehr zwischen Wand und Couch hat). Der Nutzer ist während des Bearbeitungsvorgangs außer Haus und kommt erst nach Abschluss des Bearbeitungsvorgangs zurück. Der Roboter reinigt den Rest der Wohnung, speichert den aktuellen Bearbeitungsvorgang ab, und kehrt zu seiner Auflladestation zurück.

Im Anschluss analysiert der Roboter die Karte und ermittelt, ob ein wesentlicher Reinigungsgewinn (also eine Verbesserung der "Reinheit" der zu reinigenden Wohnung) erzielt werden könnte, wenn die Couch wieder an den ursprünglichen Platz verschoben wird. In dem Fall, dass es zu einem wesentlichen Reinigungsgewinn kommen würde verständigt der Roboter den Nutzer (über die Mensch-Maschine-Schnittstelle 200) über die nicht gereinigten Bereiche der Wohnung (in diesem Beispiel der nicht gereinigte Bereich hinter der Couch) und gibt eine entsprechende Begründung an (z.B. "Bereich konnte nicht angefahren werden - Platz reicht nicht aus").

Der Nutzer hat dann die Möglichkeit in den Reinigungsprozess insofern einzugreifen, als er die Couch wieder zurück verschiebt, sodass der Roboter ausreichend Platz für eine Reinigung hat. Anschließend kann der Nutzer dem Roboter (über die Mensch-Maschine-Schnittstelle 200, z.B. eine Taste am Roboter) ein "Finish Cleaning" Kommando ("Schließe die Reinigung ab" Kommando) geben. Mit Hilfe der gespeicherten Karte der Umgebung und der Information über den nicht gereinigten Bereich kann der Roboter nun gezielt versuchen den Bereich hinter der Couch anzufahren und zu reinigen. Falls die Couch ausreichend verschoben wurde, wird dann beispielsweise (nur) der Bereich hinter der Couch gereinigt und damit der Reinigungsvorgang der kompletten Wohnung abgeschlossen.

Alternativ dazu hat der Nutzer aber beispielsweise auch die Möglichkeit den Roboter darüber zu informieren, dass er in Zukunft keine Verständigung mehr über die verschobene Couch erhalten möchte. In diesem Fall kann der Roboter diese Information mit dem Objekt "Couch" in der Karte verknüpfen, in der Karte speichern und in Zukunft bei einem Verschieben der Couch selbst dann nicht nachfragen, wenn ein signifikanter Reinigungsgewinn erzielt werden könnte. Zudem ist es durch das Verknüpfen der Benutzerinteraktion mit Teilen der Karte und das Speichern dieser Verknüpfung auch möglich in Zukunft dem Nutzer die Information, dass keine Verständigung bei Blockierung dieses Bereichs erwünscht ist, in der Karte anzuzeigen. Auf diese Weise könnte der Nutzer diese Verknüpfungen zu einem späteren Zeitpunkt bearbeiten und beispielsweise ändern.

Durch die vom Roboter mitgeteilte Information weiß der Nutzer beispielsweise auch, dass der Roboter den Bereich hinter der Couch nur schwer bzw. knapp erreichen kann. Um den Erfolg für zukünftige Reinigungsvorgänge zu erhöhen hat der Nutzer nun auch die Möglichkeit diesen schwer zugänglichen Bereich für den Roboter leichter erreichbar zu machen. Der Roboter könnte jedoch auch aus einfachen Eingaben des Benutzers lernen, welches Verhalten von ihm in Bezug auf Informationen über Hindernisse erwartet wird und kann in Zukunft darauf Rücksicht nehmen.

Zweites Beispiel: Bei einem Reinigungsvorgang ist der Platz unter dem Esstisch mit Stühlen so verstellt, dass keine gute Reinigungsabdeckung unter dem Tisch möglich ist. Der Roboter lässt diesen Bereich aus und setzt die Reinigung an anderer Stelle fort. Nach Abschluss der Reinigung der Wohnung kehrt der Roboter zur Basisstation zurück. Dort ergibt die Analyse der Reinigungskarte im Vergleich zur gespeicherten Karte und zu früheren Reinigungsergebnissen, dass es sich bei dem ausgelassenen Bereich um einen üblicherweise stark verschmutzten Bereich handelt und somit ein großer Reinigungsgewinn erzielt werden könnte. Aus diesem Grund benachrichtigt der Roboter den Nutzer, dass der Bereich unter dem Tisch nicht gereinigt werden konnte, da die Stuhlbeine zu eng stehen.

Der Nutzer hat dann die Möglichkeit den Bereich besser zugänglich zu machen (zB.: durch Stellen der Stühle auf den Tisch) und den Roboter mit Hilfe einer "Finish Cleaning" Taste zu einem erneuten Reinigungsversuch des ausgelassenen Bereiches zu veranlassen. Alternativ könnte der Nutzer aber auch beschließen, dass er diesen Bereich im Allgemeinen lieber von Hand reinigen möchte und den Bereich als Ausschlussbereich in der Karte markieren. Der Roboter wird in diesem Fall den Bereich nicht mehr anzufahren versuchen. Dadurch kann beispielsweise auch die Gefahr reduziert werden dort hängen zu bleiben.

Drittes Beispiel: Bei einem Reinigungsvorgang "entdeckt" der Roboter, dass eine Tür verschlossen oder blockiert ist. Der Roboter reinigt den Rest der Wohnung und kehrt zu seiner Aufladestation zurück. Die im Anschluss durchgeführte Analyse der Reinigungskarte ergibt, dass durch die geschlossene Tür ein ganzes Zimmer nicht mehr angefahren und gereinigt werden konnte. Auf Anfrage des Nutzers (oder von sich aus) informiert der Roboter (über die Mensch-Maschine-Schnittstelle 200) den Nutzer über die nicht gereinigten Bereiche der Wohnung im Vergleich zu seinen letzten Reinigungsvorgängen (in diesem Fall entspricht der nicht gereinigte Bereich dem geschlossenen Zimmer) und gibt eine entsprechende Begründung an (z.B. "Zimmer konnte nicht angefahren werden - Tür ist geschlossen").

Der Nutzer hat nun die Möglichkeit in den Reinigungsprozess insofern einzugreifen, als er die Tür öffnet, sodass der Roboter in das Zimmer fahren kann. Anschließend kann der Nutzer dem Roboter (wiederum über die Mensch-Maschine-Schnittstelle 200, z.B. eine Taste am Roboter) ein "Finish Cleaning" Kommando ("Schließe die Reinigung ab" Kommando) geben. Mit Hilfe der gespeicherten Karte der Umgebung und der Information über den nicht gereinigten Bereich kann der Roboter nun gezielt versuchen das Zimmer anzufahren und zu reinigen. Falls dies gelingt, ist damit der Reinigungsvorgang der kompletten Wohnung abgeschlossen. Um den Erfolg für zukünftige Reinigungsvorgänge zu erhöhen, hat der Nutzer nun auch die Möglichkeit darauf zu achten, die Tür zu diesem Zimmer geöffnet zu lassen.

Alternativ dazu kann der Nutzer dem Roboter aber beispielsweise (über die Mensch-Maschine-Schnittstelle 200, z.B. über eine weitere Taste) mitteilen, dass er wünscht, dass dieses Zimmer nur gereinigt wird, wenn die Türe offen ist. In einem beispielsweise darauf folgenden Dialog kann er zum Beispiel auch auswählen, dass eine erneute Mitteilung jedoch dann erwünscht ist, wenn das Zimmer zum Beinspiel seit mehr als einer Woche (oder einem anderen definierbaren Zeitraum) nicht gereinigt wurde. Der Roboter kann dann diese Information über das gewünschte Verhalten mit der entsprechenden Kartenposition verknüpfen und abspeichern und in Zukunft nach den Wünschen des Benutzers handeln.

Viertes Beispiel: Der Roboter bricht seinen aktuellen Reinigungsvorgang der Küche ab, da zu viele bewegte Hindernisse (z.B. Menschen) den Reinigungsvorgang zu lange (z.B. in Bezug einer vordefinierbaren Zeitvorgabe) verzögern. Der Roboter reinigt den Rest der Wohnung, speichert den aktuellen Reinigungsvorgang ab und kehrt zu seiner Aufladestation zurück. Nach der Analyse der Reinigungskarte entscheidet der Roboter, dass er den Nutzer informieren soll, da ein wesentlicher Reinigungsgewinn durch die Reinigung der Küche entstehen würde. Er sendet dem Nutzer (über die Mensch-Maschine-Schnittstelle 200) eine Nachricht über die unzureichend gereinigten Bereiche der Wohnung (in diesem Fall entspricht der unzureichend gereinigte Bereich der Küche) und gibt eine entsprechende Begründung an (z.B. "Bereich konnte nicht ausreichend gereinigt werden - zu viel Bewegung").

Der Nutzer kann dem Roboter (über die Mensch-Maschine-Schnittstelle 200, z.B. eine Taste am Roboter) ein "Finish Cleaning" Kommando ("Schließe die Reinigung ab" Kommando) geben. Der Roboter kann nun gezielt die Küche anfahren und reinigen. Falls dies gelingt, ist damit der Reinigungsvorgang der kompletten Wohnung abgeschlossen. Durch die erhaltene Information weiß der Benutzer nun auch, dass der Roboter zur ursprünglichen Zeit die Küche (z.B. aufgrund eines zu hohen Menschenaufkommens) nur erschwert reinigen kann. Um den Erfolg für zukünftige Reinigungsvorgänge zu erhöhen, hat der Nutzer nun beispielsweise die Möglichkeit die Kalendereinstellung des Roboters derart zu ändern, dass sich mit hoher Wahrscheinlichkeit weniger Menschen während des neu gewählten Zeitabschnitts in der Küche aufhalten.

In dem Fall, beispielsweise, dass es keinen geeigneteren Zeitpunkt für die Reinigung dieses Zimmers gibt, kann der Benutzer aber den Roboter auch auffordern in Zukunft trotz Bewegung die Küche so gut wie möglich zu reinigen. Es bestünde zum Beispiel auch die Möglichkeit den Roboter anzuweisen, das Gebiet mehrmals während eines Reinigungsvorganges zu bearbeiten, um eine bessere Abdeckung trotz Bewegung zu gewährleisten. Diese Information kann dann wieder in der Karte vermerkt werden und der Roboter kann sich in Zukunft dem erwünschten Verhalten anpassen.

Fünftes Beispiel: Ein mobiler Roboter wird dazu verwendet in einem Gebäude aufgestellte Geräte (z.B. Wasserspender, Kopiermaschinen, Kaffeeautomaten, Beleuchtung, etc.) zu inspizieren oder allgemein das Gebäude beispielsweise nach unerwarteten Objekten oder (unbefugten) Personen abzusuchen. Zu diesem Zweck hat der mobile Roboter bereits eine vollständige Karte der Umgebung bei einer früheren Inspektion aufgebaut. Der Roboter kann einen Raum nicht anfahren, weil eine Schiebetür klemmt. Der Roboter inspiziert den Rest des Gebäudes soweit wie möglich, fährt zurück in seine Ausgangsposition und meldet dem Nutzer (z.B. dem Nachtportier) beispielsweise per Email über eine drahtlose LAN-Schnittstelle (LAN: local area network) dass ein Raum nicht inspiziert werden konnte. Der Nutzer hat die Gelegenheit, die klemmende Tür zu reparieren und den Roboter, beispielsweise über eine Antwort-Email zum Fortsetzen der Inspektion zu bringen.

Im fünften Beispiel wird die Mensch-Maschine-Schnittstelle 200 beispielsweise durch einen Email-Client auf einen Computer gebildet und das Kommunikationsmodul 150 durch die Wireless-LAN-Schnittstelle des Roboters, welche eine Kommunikation über ein (lokales) Netwerk mit dem Benutzer ermöglicht. Andere Ausführungen einer Mensch-Maschine-Schnittstelle 200 und eines Kommunikationsmoduls 150 sind jedoch möglich.

Die im Zusammenhang mit der Bearbeitung einer Bodenfläche beschriebenen Beispiele und technischen Merkmale des mobilen Roboters sind auch auf einen mobilen Roboter zur Ausführung anderer Tätigkeiten übertragbar. Alle Tätigkeiten, welche von autonomen selbstfahrenden Robotern übernommen werden können sind hierbei denkbar. Diese Tätigkeiten können beispielsweise die Inspektion der Bodenfläche oder der Umgebung, den Transport von Gegenständen, die Reinigung von Luft und/oder das Ausführen von Unterhaltungsspielen umfassen. Das beschriebene Bearbeitungsmodul 140 ist bei Robotern, welche andere oder zusätzliche Tätigkeiten als die Bearbeitung von Böden ausführen entsprechend ausgebildet. In manchen Fällen ist ein Bearbeitungsmodul 140 nicht notwendig, wie beispielsweise beim alleinigen Überwachen oder Inspizieren von Räumen, Flächen oder Gegenständen.

**Patentansprüche**

1. Mobiler selbstfahrender Roboter (100) zum autonomen Ausführen von Tätigkeiten; der Roboter weist folgendes auf:

    ein Antriebsmodul (130) zur Bewegung des Roboters (100) über die Bodenfläche;
    ein Bearbeitungsmodul (140) zum Ausführen der Tätigkeiten während eines Bearbeitungsvorganges;
    ein Navigationsmodul (110), welches dazu ausgebildet ist, den Roboter (100) während des Bearbeitungsvorganges anhand einer Karte der Umgebung über die Bodenfläche zu navigieren, und eine oder mehrere Karten der Umgebung abzuspeichern und zu verwalten;
    mindestens ein Sensormodul (120) zum Erfassen von Informationen betreffend die Struktur der Umgebung;
    eine Analyseeinheit (150), welche dazu ausgebildet ist, die bei einem Bearbeitungsvorgang bearbeitete Fläche zu bestimmen, diese mit einer Referenz zu vergleichen und Informationen über eine Abweichung zwischen der Referenz und der tatsächlich bearbeiteten Fläche zu speichern; und
    ein Kommunikationsmodul (160), welches dazu ausgebildet ist,
    während, nach Abschluss oder nach Unterbrechung des Bearbeitungsvorganges eine Verbindung mit einer Mensch-Maschine-Schnittstelle (200) herzustellen, um die gespeicherten Informationen über eine Abweichung zwischen der Referenz und der tatsächlich bearbeiteten Fläche mitzuteilen und damit einem Nutzer die Möglichkeit zu geben, in den Bearbeitungsvorgang einzugreifen, Veränderungen der Umgebung vorzunehmen oder einen erneuten Bearbeitungsvorgang zu starten, wobei anhand bestimmter, vordefinierbarer Kriterien entschieden wird, ob die gespeicherten Informationen über die Abweichung zwischen der Referenz und der tatsächlich bearbeiteten Fläche nach Aufforderung durch den Nutzer, ohne Aufforderung, oder gar nicht mitgeteilt werden sollen,
    wobei die Kriterien eine Kostenfunktion einer nicht bearbeiteten Fläche, insbesondere einen Reinigungsgewinn oder einen Flächengewinn der nicht bearbeiteten Fläche umfassen.

2. Roboter gemäß Anspruch 1, bei dem zu nicht gereinigten Teil-Flächen zugehörige Teil-Kostenfunktionen berechnet und aus diesen eine Gesamt-Kostenfunktion gebildet wird, wobei abhängig von dieser Gesamt-Kostenfunktion entschieden wird, ob und in welcher Weise mit dem Nutzer über die Mensch-Maschine-Schnittstelle Kontakt aufgenommen wird.

3. Roboter (100) gemäß Anspruch 1 oder 2, wobei das Kommunikationsmodul (160) weiter dazu ausgebildet ist, einen Steuerbefehl von dem Nutzer entgegenzunehmen, den Bearbeitungsvorgang zu unterbrechen, fortzusetzen, zu modifizieren oder neu zu beginnen.

4. Roboter (100) gemäß einem der Ansprüche 1 bis 3, bei dem die Referenz durch einen Nutzer in den Roboter (100) eingegeben und geändert werden kann und/oder der Roboter (100) selbstständig eine Referenz erstellen und eine bestehende Referenz ändern kann.

5. Roboter (100) gemäß Anspruch 4, der dazu ausgebildet ist, die Referenz durch Analyse wenigstens eines vorangegangenen Bearbeitungsvorgangs und/oder vorangegangener Steuerbefehle eines Nutzers zu erstellen oder zu ändern.

6. Roboter (100) gemäß einem der vorangehenden Ansprüche, bei dem die Bestimmung der bearbeiteten Fläche wenigstens einmal während und/oder am Ende des Bearbeitungsvorgangs durchgeführt wird.

7. Roboter (100) gemäß einem der vorangehenden Ansprüche, der dazu ausgebildet ist, einen Reinigungsgewinn und/oder einen Flächengewinn einer nicht bearbeiteten Fläche zu bestimmen.

8. Roboter (100) gemäß einem der vorangehenden Ansprüche, der dazu ausgebildet ist, Flächen nach Kostenfunktionen (R) zu beurteilen.

9. Roboter (100) gemäß Anspruch 8, bei dem die Kostenfunktionen durch vorangegangenes Nutzerfeedback adaptiert werden können.

10. Roboter (100) gemäß einem der vorangehenden Ansprüche, bei der die Mitteilung der Informationen über eine Abweichung zwischen der Referenz und der tatsächlich bearbeiteten Fläche Informationen über die Gründe der Nichtbearbeitung und/oder über vorangegangenes Nutzerfeedback beinhaltet, beispielsweise um dem Benutzer eine Korrektur seines Feedbacks zu ermöglichen.

11. Roboter (100) gemäß einem der vorangehenden Ansprüche, der dazu ausgebildet ist, Nutzerfeedback in den Karten der Umgebung zu speichern.

12. Roboter (100) gemäß einem der vorangehenden Ansprüche, der dazu ausgebildet ist, anhand bestimmter Kriterien zu bestimmen, ob Informationen über eine Abweichung zwischen der Referenz und der tatsächlich bearbeiteten Fläche sofort oder zu einem späteren Zeitpunkt mitgeteilt werden.

13. Roboter (100) gemäß Anspruch 12, bei dem Kriterien zum späteren Mitteilen von Informationen eine Uhrzeit, ein Batterieladestand, die Abwesenheit des Nutzers und/oder vorher eingegebenes Nutzerfeedback sind.

14. Verfahren zur automatischen Ausführung von Tätigkeiten mit Hilfe eines selbstfahrenden autonomen Roboters (100); das Verfahren umfasst folgendes:

   Speichern und Verwalten wenigstens einer Karte der Umgebung;
   Starten des Bearbeitungsvorganges und Ausführen der Tätigkeiten mit Hilfe eines am Roboter (100) angeordneten Bearbeitungsmoduls (140);
   Navigieren des Roboters über die Bodenfläche während des Bearbeitungsvorganges anhand einer Karte der Umgebung;
   Erfassen von Informationen betreffend die Struktur der Umgebung während des Bearbeitungsvorganges durch mindestens ein am oder im Roboter (100) angeordnetes Sensormodul (120);
   Bestimmen der während eines Bearbeitungsvorganges bearbeiteten Fläche;
   Vergleichen der während eines Bearbeitungsvorganges bearbeiteten Fläche mit einer Referenz;
   Ermitteln von Informationen über eine Abweichung zwischen der Referenz und der tatsächlich bearbeiteten Fläche; und
   Entscheiden anhand bestimmter Kriterien, ob die Informationen betreffend die Abweichung zwischen der Referenz und der tatsächlich bearbeiteten Fläche nach Aufforderung durch einen Nutzer, ohne Aufforderung oder gar nicht mitgeteilt werden sollen,
   wobei die Kriterien eine Kostenfunktion einer nicht bearbeiteten Fläche, insbesondere einen Reinigungsgewinn oder einen Flächengewinn der nicht bearbeiteten Fläche umfassen.

15. Verfahren gemäß Anspruch 14, bei dem zu nicht gereinigten Teil-Flächen zugehörige Teil-Kostenfunktionen berechnet und aus diesen eine Gesamt-Kostenfunktion gebildet wird, wobei abhängig von dieser Gesamt-Kostenfunktion entschieden wird, ob und in welcher Weise mit dem Nutzer über die Mensch-Maschine-Schnittstelle Kontakt aufgenommen wird.

**Claims**

1. A mobile self-propelled robot (100) for autonomously executing activities; the robot comprises:

   a drive module (130) for moving the robot (100) across the floor area;
   a processing module (140) for executing the activities during a processing operation;
   a navigation module (110), which is configured to navigate the robot (100) across the floor area during the processing operation based on a map of the environment, and to store and manage one or several maps of the environment;
   at least one sensor module (120) for acquiring information relating to the structure of the environment;
   an analysis unit (150), which is configured to determine the floor area processed during the processing operation, to compare it to a reference, and to store information about a deviation between the reference and the floor area actually processed; and

a communication module (160), which is configured to

establish, during, after completion, or after interruption of the processing procedure, a connection to a human-machine interface (200), in order to communicate the stored information about the deviation between the reference and the floor area actually processed and thereby to give a user a possibility of intervening in the processing operation, making changes to the environment, or starting a renewed processing operation, wherein whether the stored information about the deviation between the reference and the floor area actually processed are communicated upon request by the user, without request, or not communicated at all is decided based on specific, pre-definable criteria;

wherein the criteria comprise a cost function of a non-processed area, in particular a cleaning benefit or an area benefit of the non-processed area.

2. The robot according to claim 1, wherein partial cost functions associated with non-cleaned partial areas are calculated and an overall cost function is formed therefrom, wherein whether and in which way contact is made with the user via the human-machine interface is decided based on the overall cost function.

3. The robot (100) according to one the claims 1 or 2, wherein the communication module (160) is further configured to accept a control command from the user to interrupt, continue, modify, or restart the processing operation.

4. The robot (100) according to one the claims 1 to 3, wherein the reference can be input into the robot (100) and changed by a user and/or the robot (100) can independently prepare a reference and change an existing reference.

5. The robot (100) according to claim 4, which is configured to prepare or change the reference by analyzing at least one preceding processing operation and/or preceding control commands of the user.

6. The robot (100) according to one of the preceding claims, wherein a determination of the processed area is carried out at least once during and/or at the end of the processing operation.

7. The robot (100) according to one of the preceding claims, which is configured to determine a cleaning benefit and/or an area benefit of a non-processed area.

8. The robot (100) according to one of the preceding claims, which is configured to judges areas according to cost functions (R).

9. The robot (100) according to claim 8, wherein the cost functions can be adapted by previous user feedback.

10. The robot (100) according to one of the preceding claims, wherein the communication of the information about a deviation between the reference and the floor area actually processed contains information about the reasons for not processing and/or about previous user feedback, for example to give the user a possibility to correct his feedback.

11. The robot (100) according to one of the preceding claims, which is configured to store user feedback in the maps of the environment.

12. The robot (100) according to one of the preceding claims, which is configured to determine, on the basis of specific criteria, whether information about a deviation between the reference and the floor area actually processed are communicated immediately or at a later point in time.

13. The robot (100) according to claim 12, wherein criteria for communicating later information are a time of day, a battery charge state, the absence of the user and/or previously input user feedback.

14. A method for automatically executing activities with the help of a self-propelled autonomous robot (100); the method comprises:

storing and managing at least one map of an environment;
starting a processing operation and executing the activities with the help of a processing module (140) arranged on the robot (100);
navigating the robot across a floor area during the processing operation based on a map of the environment;

acquiring information with respect to the structure of the environment during the processing operation by way of at least one sensor module (120) arranged on or in the robot (100);
determining the floor area processed during the processing operation;
comparing the floor area processed during the processing operation to a reference;
ascertaining information about a deviation between the reference and the floor area actually processed; and
deciding, on the basis of specific criteria, whether the information about the deviation between the reference and the floor area actually processed are to be communicated upon request by a user, without request, or not at all, wherein the criteria comprise a cost function of a non-processed area, in particular a cleaning benefit or an area benefit of the non-processed area.

15. The method according to claim 14, wherein partial cost functions associated with non-cleaned partial areas are calculated and an overall cost function is formed therefrom, wherein whether and in which way contact is made with the user via the human-machine interface is decided based on the overall cost function.

## Revendications

1. Robot mobile autopropulsé (100) conçu pour exécuter des activités de manière autonome ; le robot comprend :

   un module d'entraînement (130) destiné à déplacer le robot (100) sur la surface du sol ;
   un module de traitement (140) destiné à exécuter des activités pendant une opération de traitement ;
   un module de navigation (110), lequel est conçu pour naviguer le robot (100) pendant l'opération de traitement à l'aide d'une carte de l'environnement sur la surface du sol, et pour enregistrer et gérer une ou plusieurs cartes de l'environnement ;
   au moins un module capteur (120) conçu pour saisir des informations concernant la structure de l'environnement ;
   une unité d'analyse (150), laquelle est conçue pour déterminer des surfaces traitées pendant une opération de traitement, les comparer à une référence et enregistrer des informations sur la différence entre la référence et les surfaces effectivement traitées ; et
   un module de communication (160), lequel est conçu pour
   établir une connexion avec une interface homme-machine (200) pendant, après la fin ou après l'interruption de l'opération de traitement, afin de communiquer les informations enregistrées concernant la différence entre la référence et les surfaces effectivement traitées et de donner à l'utilisateur la possibilité d'intervenir dans l'opération de traitement, d'effectuer des modifications de l'environnement ou de recommencer une nouvelle opération de traitement, dans lequel on décide à l'aide de critères déterminés pouvant être définis au préalable si les informations enregistrées concernant la différence entre la référence et les surfaces effectivement traitées doivent être communiquées après requête par l'utilisateur, sans requête, ou ne doivent pas être communiquées du tout,
   dans lequel les critères comprennent une fonction de coût d'une surface non traitée, en particulier un gain de nettoyage ou un gain de surface de la surface non traitée.

2. Robot selon la revendication 1, dans lequel des fonctions de coût partielles associées à des surfaces partielles non traitées sont calculées et une fonction de coût globale est formée, dans lequel en fonction de cette fonction de coût globale on décide si et de quelle façon un contact doit être établi avec l'utilisateur via l'interface homme-machine.

3. Robot (100) selon l'une des revendications 1 ou 2, dans lequel le module de communication (160) est en outre conçu pour prendre un ordre de commande de l'utilisateur d'interrompre, de continuer, de modifier ou de recommencer une opération de traitement.

4. Robot (100) selon l'une des revendications 1 à 3, dans lequel la référence est entrée par un utilisateur dans le robot (100) et peut être modifiée et/ou le robot (100) établit de manière indépendante une référence et peut modifier une référence existante.

5. Robot (100) selon la revendication 4, lequel est conçu pour établir ou modifier la référence en analysant au moins une opération de traitement précédente et/ou des ordres de commande précédents d'un utilisateur.

6. Robot (100) selon l'une des revendications précédentes, dans lequel la détermination de la surface traitée est effectuée au moins une fois pendant et/ou à la fin de l'opération de traitement.

**7.** Robot (100) selon l'une des revendications précédentes, qui est conçu pour déterminer un gain de nettoyage et/ou un gain de surface d'une surface non traitée.

**8.** Robot (100) selon l'une des revendications précédentes, qui est conçu pour juger des surfaces d'après des fonctions de coût (R).

**9.** Robot (100) selon la revendication 8, dans lequel les fonctions de coût peuvent être adaptées par un feedback d'utilisateur précédent.

**10.** Robot (100) selon l'une des revendications précédentes, dans lequel la communication des informations sur la différence entre la référence et les surface effectivement traitées contient des informations sur les raisons du non-traitement et/ou sur un feedback d'utilisateur précédent, par exemple pour permettre à l'utilisateur de corriger son feedback.

**11.** Robot (100) selon l'une des revendications précédentes, lequel est conçu pour enregistrer un feedback d'utilisateur dans les cartes de l'environnement.

**12.** Robot (100) selon l'une des revendications précédentes, lequel est conçu pour déterminer à l'aide de critères déterminés si des informations sur la différence entre le référence et la surface effectivement traitée doivent être communiquées tout de suite ou à un moment ultérieur.

**13.** Robot (100) selon la revendication 12, dans lequel des critères pour la communication ultérieure d'informations sont un horaire, un état de charge de batterie, l'absence de l'utilisateur et/ou un feedback d'utilisateur entré précédemment.

**14.** Procédé d'exécution automatique d'activité à l'aide d'un robot mobile autopropulsé (100); le procédé comprend :

l'enregistrement et la gestion d'au moins une carte de l'environnement ;
le démarrage d'une opération de traitement et l'exécution des activités à l'aide d'un module de traitement (140) disposé sur le robot (100) ;
la navigation du robot sur la surface du sol pendant l'opération de traitement à l'aide d'une carte de l'environnement ;
la saisie d'informations concernant la structure de l'environnement pendant l'opération de traitement au moyen d'au moins un module capteur (120) disposé sur ou dans le robot (100) ;
la détermination de la surface traitée pendant une opération de traitement ;
la comparaison de la surface traitée pendant une opération de traitement avec une référence ;
la détermination d'information sur la différence entre la référence et les surfaces effectivement traitées ; et
la décision à l'aide de critères déterminés si les informations sur la différence entre la référence et les surfaces effectivement traitées doivent être communiquées après requête par un utilisateur, sans requête, ou ne doivent pas être communiquées du tout,
dans lequel les critères comprennent une fonction de coût d'une surface non traitée, en particulier un gain de nettoyage ou un gain de surface de la surface non traitée.

**15.** Procédé selon la revendication 14, dans lequel des fonctions de coût partielles associées à des surfaces partielles non traitées sont calculées et une fonction de coût globale est formée, dans lequel en fonction de cette fonction de coût globale on décide si et de quelle façon un contact doit être établi avec l'utilisateur via l'interface homme-machine.

Fig. 1

Sensormodul 120

Kommunikationsmodul 160

Steuer-/Navigationsmodul 110

Antriebsmodul 130

Bearbeitungsmodul 140

Mensch-Maschine-Schnittstelle
200 (HMI)

Fig. 2

Fig. 3

Fig. 4

Analyseeinheit 150

Sensormodul 120

Kommunikationsmodul 160

Steuer-/Navigationsmodul 110

Antriebsmodul 130

Bearbeitungsmodul 140

Mensch-Maschine-Schnittstelle
200 (HMI)

Fig. 5

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2287697 A2
- EP 1967116 A1
- US 6667592 B2
- US 20090182464 A1
- US 5995884 A
- WO 03014852 A1
- US 20100313364 A1
- US 20110264305 A

**In der Beschreibung aufgeführte Nicht-Patentliteratur**

- **H. DURRANT-WHYTE ; T. BAILEY.** Simultaneous Localization and Mapping (SLAM): Part I The Essential Algorithms. *IEEE Robotics and Automation Magazine,* Juni 2006, vol. 13 (2), 99-110